## Europäisches Patentamt
## European Patent Office
## Office européen des brevets

(19)

(11) Publication number: **0 242 054**
**A2**

(12) # EUROPEAN PATENT APPLICATION

(21) Application number: **87302172.9**

(22) Date of filing: **13.03.87**

(51) Int. Cl.⁴: **G 06 F 13/36**

(30) Priority: **05.04.86 GB 8608375**

(43) Date of publication of application: **21.10.87**
**Bulletin 87/43**

(84) Designated Contracting States: **DE FR GB IT NL**

(71) Applicant: **INTERNATIONAL COMPUTERS LIMITED, ICL House, Putney, London, SW15 1SW (GB)**

(72) Inventor: **Walton, Alan William, York House§Phoenix Green§Hartley Wintney, Basingstoke Hants. RG27 8RR (GB)**

(74) Representative: **Guyatt, Derek Charles et al, STC Patents Edinburgh Way, Harlow Essex CM20 2SH (GB)**

(54) **Contention system.**

(57) Digital electronic apparatus is described, comprising a number or units which share a common resource, such as a bus. Each unit plugs into a connection slot containing first and second groups of terminals, the slots being arranged in order of priority. When a unit requires to use the shared resource, it applies a signal to all of the first group of terminals in the slot to which it is attached. This signal is then propagated to at least one of the second group of terminals in each lower-priority slot, so as to inhibit a grant signal in all those slots. This enables contention between the units to be resolved in a single inter-unit delay time. The allocation of the terminals to the first and second groups may be fixed, or may be controlled by a slot identity obtained from a further group of terminals.

# CONTENTION SYSTEM

This invention relates to a contention system. More specifically, the invention is concerned with digital electronic apparatus comprising a plurality of units which share a common resource, having means for resolving competing requests from the units for use of the shared resource. The units may, for example, be processing units and the shared resource may be a data storage unit or a bus interconnecting the units.

One previously proposed method of resolving contention is as follows. Whenever a unit requires to use the shared resource, it generates a request by applying a unique identifier to the lines of a bus interconnecting the units. All the units then examine the lines of the bus one at a time, starting from the most significant bus line. If any unit detects a discrepancy between the signal it has applied to the bus line and the signal actually present on that line, that unit withdraws from the contention and ceases driving the bus lines. After all the bus lines have been examined, only the requesting unit with the highest priority will remain in the contention, and will be granted the use of the shared resource.

This technique requires n bus lines for resolving contention between $2^n$ units, and the time taken to establish ownership of the shared resource depends on the delay time of the logic in each unit, plus n inter-unit delay times. Thus, if there is a large

- 2 - 0242054

number of units or the inter unit delay is large, the time taken to resolve contention may be excessive.

One object of the present invention is to provide a contention system which does not suffer from this problem.

## Summary of the invention

According to the invention there is provided digital electronic apparatus comprising a plurality of units and a connection structure having a plurality of connection slots to which the units are connected, the slots having a predetermined order of priority, characterised in that

(a) each slot includes first and second groups of terminals interconnected in such a manner that, when a predetermined signal level is applied to the first group of terminals in any slot, at least one of the second group of terminals in each lower-priority slot receives that signal level, and

(b) each unit includes means responsive to a request signal for applying said predetermined signal level to all of the first group of terminals in the slot to which it is connected, and means for monitoring the second group of terminals in that slot, to produce a grant signal if none of that second group receives said predetermined signal level.

## Brief description of the drawings

Two contention systems in accordance with the invention will now be described by way of example with reference to the accompanying drawings.

Figure 1 shows digital electronic apparatus comprising a plurality of units and a backplane.

Figure 2 shows the backplane.

Figure 3 shows connections in the backplane for resolving contention between the units.

Figure 4 shows logic in each unit for resolving contention.

- 3 -

0242054

Figures 5 and 6 illustrate a second embodiment of the invention.

Description of the embodiments of the invention

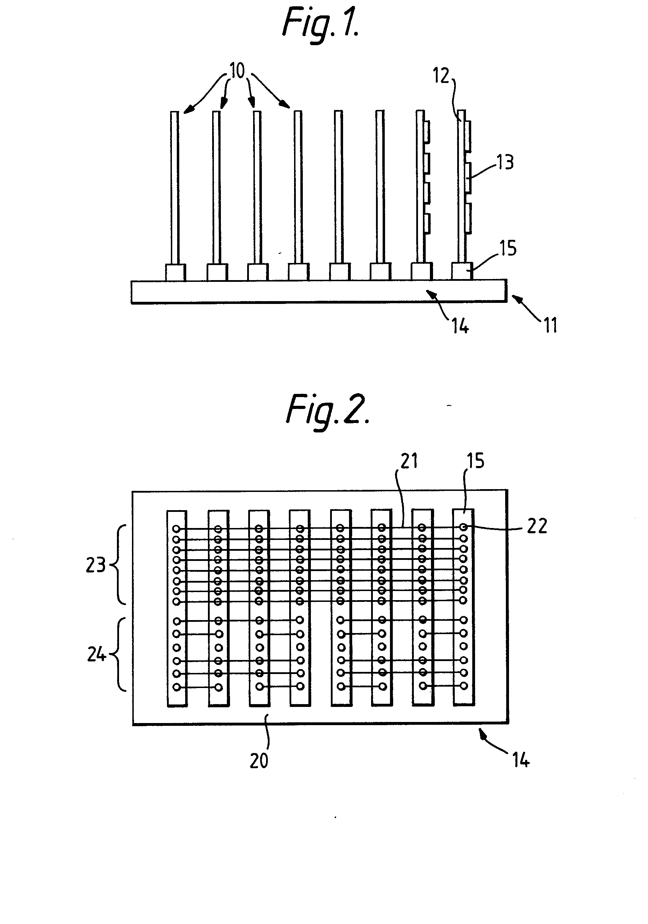

Referring to Figure 1, this shows digital electronic apparatus comprising eight units 10, and an interconnection structure 11. The units 10 may, for example be processing units, or input/output control units. Each unit 10 consists of a printed circuit board 12, carrying electronic components 13. The interconnection structure 11 comprises a backplane 14 having eight connection slots 15 formed by edge connectors mounted on the backplane. Each connection slot has a plurality of terminals which make contact with conductive fingers or a connector on the printed circuit board 12 when it is plugged into the slot. Each unit 10 can plug into any of the connection slots.

Referring to Figure 2, the backplane 14 consists of a printed circuit board 20 with a pattern of conductive tracks 21 interconnecting the terminals 22 of the connection slots. The tracks provide a bus 23 which interconnects all the slots in parallel. This bus is used for data transfer between the units 10, and represents a resource which is shared between all the units. The tracks also include a set of contention resolution connections 24 to be described below. The backplane provides various other connections (not shown), such as power supply connections for the units 10.

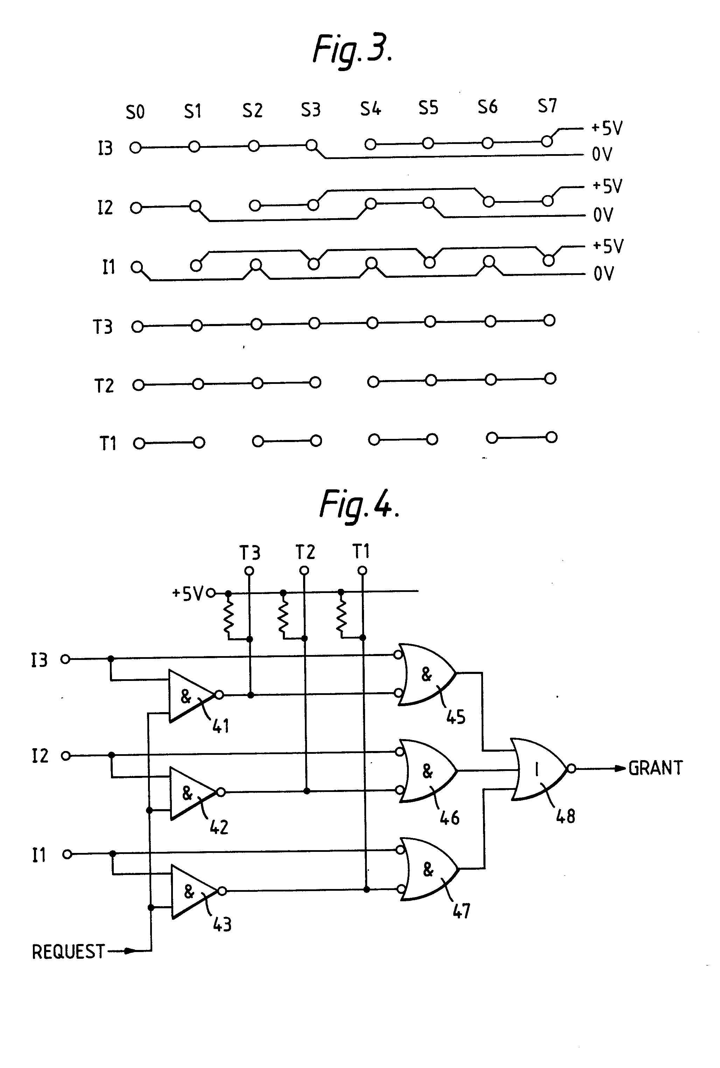

Referring now to Figure 3, this shows the contention resolution connections 24 in more detail. In this figure, the eight connection slots 15 are labelled S0-S7. In each of the slots S0-S7, six terminals I1-I3 and T1-T3 are used for contention resolution. The first three of these terminals I1-I3 are selectively wired either to a high voltage (+5 volts) or to a low voltage (0 volts), so as to provide each slot with a hard-wired three-bit slot identity or geographic address. For example, slot S3 has terminal I3 wired to the low voltage level, and terminals I2 and I1 wired to the high voltage level, so that its slot identity is 011.

Terminals T3 are all connected together by a track as shown. Terminals T2 in slots S0-S3 are all connected together, while terminals T2 in slots S4-S7 are connected together. Terminals T1 are connected together in pairs in adjacent slots.

Each of the units 10 contains a contention logic circuit as shown in Figure 4. This consists of three NAND gates 41-43 with open collector outputs which are connected respectively to terminals T3, T2 and T1 of the slot to which the unit is connected. First inputs of the NAND gates are connected respectively to terminals I3, I2 and I1 of the slot, while second inputs of the gates are connected to a request input line 44. The contention logic also includes three AND gates 45, 46, 47 with inverting inputs. The first inputs of these gates are connected respectively to the terminals I3, I2 and I1 of the slot. The second inputs of these gates are connected to terminals T3, T2, T1. The outputs of the gates 45, 46, 47 are combined in a NOR gate 48, the output of which provides a GRANT signal.

In operation, whenever a unit 10 requires to use the shared bus 23, it applies a REQUEST signal to the line 44. This causes the NAND gates 41-43 to drive to a low voltage level each of the terminals T3-T1 corresponding to a "1" in the slot identity. At the same time, the AND gates 45-47 monitor the voltage levels on the terminals I3-I1 corresponding to a "0" in the slot identity, and if any of these terminals carries a low voltage, the GRANT signal is inhibited.

In other words, the slot identity (on terminals I3-I1) divides the terminals T3-T1 into two groups: those corresponding to a "1" and those corresponding to a "0" in the slot identity. When a REQUEST signal occurs, all the first group of terminals are driven low. At the same time, the second group is monitored, and GRANT is

- 5 -

0242054

inhibited if any of this group is low.

For example, in the case of slot S3, the slot identity is 011. Therefore, the REQUEST signal cause a low level to be applied to T2 and T1, and at the same time terminal T3 is monitored.

Referring again to Figure 3, the interconnections between the terminals T1-T3 are such that, wherever a low voltage level is applied to the first group of these terminals in any slot, that level will be propagated to at least one of the second group of these terminals in each lower-numbered slot, but not to any of the second group of terminals in any of the higher-numbered slots. Thus, it can be seen that a REQUEST signal produced by a unit connected to any slot will inhibit the GRANT signals in the units connected to all lower-numbered slots.

The slots are therefore arranged in an order of priority, with slot S7 having the highest priority and S0 the lowest. If one or more units simultaneously produce a REQUEST, only the one connected to the higher priority slot will produce a GRANT signal, allowing it to go ahead and use the shared resource.

It should be noted that the time required to resolve contention between the units depends on only a single inter-unit delay, i.e. the time taken to propagate a signal from one unit to any other. Thus, the system is considerably faster than the previously-proposed system referred to above.

It will be appreciated that the embodiment of the invention described above can be modified by changing the number of slots. In general, a system with $2^n$ slots will require n terminals in each slot to provide a hard-wired slot identity, and a further n terminals (corresponding to terminals T1-T3) for contention resolution.

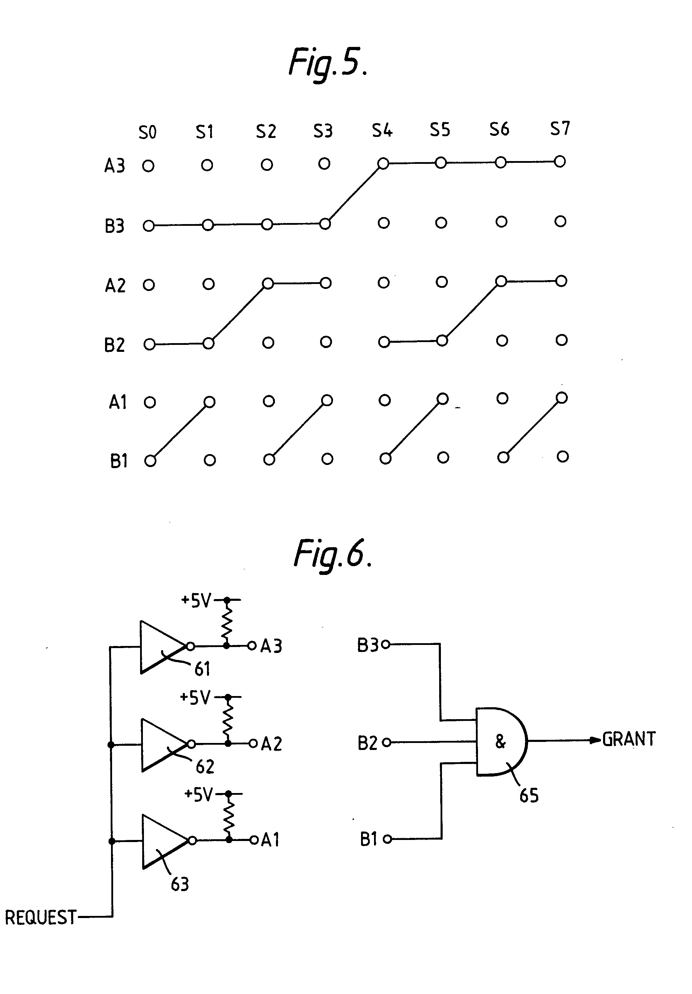

Referring now to Figures 5 and 6, these illustrate another embodiment of the invention. In this embodiment, the slots are not provided with hard-wired identities, and so terminals I1-I3 are not required. Terminals T1-T3 are replaced by two groups of terminals A1-A3 and B1-B3.

As shown in Figure 5, terminals B3 in slots S0-S3 are connected in the backplane to terminals A3 in slots S4-S7. Terminals B2 in slots S0 and S1 are connected to terminals A2 in slots S2 and S3, while terminals B2 in slots S4 and S5 are connected to terminals A2 in slots S6 and S7. Terminals B1 in slots S0, S2, S4 and S6 are respectively connected to terminals A1 in slots S1, S3, S5 and S7.

In this embodiment, the contention resolution logic in each unit 10 is as shown in Figure 6. The REQUEST signal is applied by way of three inverters 61-63 to the first group of terminals A3-A1 of the slot in which the unit is located. Thus, a REQUEST drives each of the first group of terminals to a low voltage level. At the same time, the second group of terminals B3-B1 is monitored by an AND gate 65 the output of which produces the GRANT signal. Thus, GRANT is inhibited if any of the second group of terminals is at a low voltage level.

Referring again to Figure 5, it can be seen that the interconnection between the slots is such that a low level applied to the first group of terminals A3-A1 in any slot will be propagated to at least one of the second group of terminals B3-B1 in each lower-numbered slot. Thus, as in the first embodiment of the invention, the slots are arranged in order of priority, with slot S7 the highest priority and S0 the lowest.

It will be appreciated that the embodiment of the invention described with reference to Figures 5 and 6 can be modified by varying the number of slots. In general, if there are $2^n$ slots, the first and second groups of terminals would each contain n terminals.

In the embodiments of the invention described above, the units comprise printed circuit boards.

However, in other embodiments of the invention the units may comprise, for example, very-large scale integrated circuits (VLSI) or any set of units competing for a single resource.

The system described above may be extended to provide a multi-level or cascaded contention resolution system which may be used, for example, for resolving contention between a larger number of units.

In one such multi-level system, the contending units are arranged in a plurality of groups. Each unit has a contention resolution circuit as described above with reference to Figure 4 or 6 and the resolution circuits within each group are connected together as shown in Figure 3 or 5. In addition, each group of units has a common contention logic circuit associated with it. Each of these common contention logic circuits may be as shown in Figure 4 or 6, and they are connected together as shown in Figure 3 or 5.

Within each group, the REQUEST signal lines of all the units in that group are connected together, after inversion, to a common REQUEST line, and are then red, after further inversion, to the REQUEST input of the common contention logic circuit of that group. Thus, the common contention logic circuit receives a REQUEST input if any of the units in the group produces a REQUEST. The GRANT output of the common contention logic circuit is fed in parallel to all the contention logic circuits in the group, and enables the GRANT outputs of those circuits.

Thus, it can be seen that, in this multi-level system, resolution of contention between units within the same group is handled in exactly the same way as in the single-level system described above. Resolution of contention between units in different groups is handled in an analogous way, by means of the common contention logic circuits.

CLAIMS:-

1. Digital electronic apparatus comprising a plurality of units (10) and a connection structure (11) having a plurality of connection slots (15) to which the units are connected, the slots having a predetermined order of priority, characterised in that

(a) each slot includes first and second groups of terminals (T1-T3; A1-A3, B1-B3) interconnected in such a manner that, when a predetermined signal level is applied to the first group of terminals in any slot, at least one of the second group of terminals in each lower-priority slot receives that signal level, and

(b) each unit includes means (41-43; 61-63) responsive to a request signal for applying said predetermined signal level to all of the first group of terminals in the slot to which it is connected, and means (45-48; 65) for monitoring the second group of terminals in that slot, to produce a grant signal if none of that second group receives said predetermined signal level.

2. Apparatus according to Claim 1 wherein said request signal is a request for permission to use a shared resource, and said grant signal grants permission to use the shared resource.

3. Apparatus according to Claim 2 wherein said shared resource is a bus (23), interconnecting the units.

4. Apparatus according to any preceding claim wherein each slot receives a slot address (I1-I3), unique to that slot, and each unit uses the slot address of the slot to which it is connected to control the allocation of terminals to said first and second groups.

5. Apparatus according to Claim 4 wherein there are $2^n$ units, said slot address consists of n bits, and the first and second groups together contain n terminals.

6. Apparatus according to any one of Claims 1 to 3 wherein the allocation of the terminals (A1-A3, B1-B3) to said first and second groups is fixed.

7.　　　　Apparatus according to Claim 6 wherein there are $2^n$ units, and each of said first and second groups contains n terminals.

0242054

## Fig.1.

## Fig.2.

2/3    0242054

# Fig.3.

# Fig.4.

## Fig.5.

## Fig.6.